# EUROPEAN PATENT APPLICATION

(11) **EP 2 662 799 A1**
(43) Date of publication of application: **13.11.2013**
(21) Application number: 12167166.3
(22) Date of filing: 08.05.2012
(51) Int. Cl.: G06K 7/00, G06K 19/077

(54) **Active RFID based track and trace system**

(71) Applicant: Viloc bvba, 2050 Antwerpen (BE)
(72) Inventor: Gestels, Tim, 2050 Antwerpen (BE); Hiddink, Bart, 3941 BZ Doorn (NL)
(74) Representative: BiiP cvba

(57) **Abstract**

A kit-in-parts for tracking and tracing objects, the kit-in-parts comprising: a plurality of wireless sensor devices comprising an active RF tag, each RF tag comprising:
a power source
a micro-controller
a unique ID
an RF module
at least one receiver for exchanging data with said RF tags and in communication with a program loaded on a computer, wherein said RF tag is programmed with a predetermined set of rules applying for transmitting data to the receiver to initiate data exchange between the RF tag and the computer program through said receiver; characterized in that said computer program allows tailoring said predetermined set of rules through the receiver during said data exchange between the receiver and the RF tag.

## Description

### FIELD OF THE INVENTION

The present invention concerns an active RFID based track and trace system and kit in part used therefore as well as to an object equipped with an wireless sensor device allowing tracking and tracing of the object.

### BACKGROUND OF THE INVENTION

CA 2,546,609 concerns an active RF tag based alarm system wherein the tag comprises a transmitter for transmitting signals at a predetermined interval. A receiver forwards the transmitted tag signal to a processing subsystem allowing controlling presence or absence of a tag.

US 2009/0309731 discloses a tracking system comprising an active RF tag that sends out a specific tag ID on a predefined time interval to a receiver, wherein the send message is interpreted by a receiver and a GPS to track an associated object.

Although the above systems allow tracking objects in a specific environment it does not provide for triggering an alarm by the RF tag in case the object is out of range of the network nor to determine whether an object is out of range or its RF tag is out of order. Indeed in both cases no signal will be received by the network. Another drawback of the above systems is that the battery live is rather limited as the time interval in which the RF tag sends out signals to the network is to be set to a strict minimum to allow rapid detection of a problem.

US 2008/0218351 discloses a track and trace system of use in hospitals wherein active RF tags and IR signal transceivers are provided on objects to be traced and wherein battery life of the RF tags is extended by providing an external illuminator that frequently sends IR signals and by awakening the IR transceiver in a pattern synchronized to illuminator pattern.

A drawback of the above system is that an illuminator is needed and that the objects are to be provided with both an IR transceiver and an active RF tag. Such systems are very difficult to implement in harsh conditions or in frequently changing conditions such as outdoor construction sites as the illuminator signal is likely to interfere with other signals on the construction site or to be blocked by the ever changing conditions (arising walls, repositioning of containers, ...) typical to construction sites.

It is clear from the above that there remains a need for a reliable and easy to apply track and trace system both for indoor applications and under harsh outdoor conditions such as for small work tools on construction sites.

### SUMMARY OF THE INVENTION

The present invention concerns a kit-in-parts for tracking and tracing objects, the kit-in-parts comprising:
(a) a plurality of wireless sensor devices comprising an active RF tag, each RF tag comprising:
   a power source,
   a micro-controller,
   a unique ID,
   an RF module;
(b) at least one receiver for exchanging data with said RF tags and in communication with (c) a program loaded on a computer, wherein said RF tag is programmed with a predetermined set of rules applying for transmitting data to the receiver to initiate data exchange between the RF tag and the computer program through said receiver; wherein said computer program allows tailoring said predetermined set of rules through the receiver during said data exchange between the receiver and the RF tag.

The present invention further concerns a method for tracking and tracing objects by means of a kit-in-parts as identified here above, wherein said method comprises the consecutive steps of:
- transmitting a tag identification code from the RF tag to a concerned computer program through a receiver;
- transmitting an acknowledgment from the computer program to the RF tag through said receiver, the acknowledgement comprising a specific delay time for the tag to receive a second data package from the computer program;
- the RF tag turning in to a sleep mode having reduced power consumption in view of a mode of transmitting or receiving data;
- the computer determining the location of the RF tag and retrieving a predetermined set of rules applying for a next communication between the RF tag and the computer program;
- transmitting said predetermined set of rules to said RF tag after said specific delay time, said predetermined set of rules replacing the prior set of rules stored in the RF tag.

The present invention further concerns an object having an wireless sensor device fixed thereon or therein, said wireless sensor device comprising an active RF tag, each RF tag comprising:
a power source
a micro-controller
a unique ID
an RF module
**characterized in that** said RF tag is programmed with a predetermined set of rules applying for transmitting data to a network;
wherein said RF tag is construed as to allow tailoring said predetermined set of rules during a data exchange between the network and the RF tag.

### DETAILED DESCRIPTION OF A PREFERRED EMBODIMENT

### Kit-in-parts

The kit in parts according to the present invention comprises a plurality of objects each of which is associated with a single wireless sensor device. The objects are present in communication range of at least one antenna with receiver that is in communication with a program loaded on a computer.

The wireless sensor devices each comprise an active RF tag and at least one sensor, wherein the RF tag comprises a power source, a micro-controller coupled to an output of said sensor(s), a unique ID, and an RF module comprising an antenna for transmitting and receiving data.

The RF tags used are so-called active RF tags comprising a power source, typically a button-cell type battery or coin-cell type battery (alkaline, lithium iron phosphate or lithium ion based).

The RF tag comprises an hardcoded, unique tag ID and is programmed with a predetermined set of rules applying for transmitting data to the receiver(s).

The RF tag and sensor are embedded in potting compound, such as hard 2-K PU resin (eg. Fermadur® by Sonderhoff Chemicals GmbH) in a container with a flexible side wall designed to be glued on an object to track and trace. The flexible side wall allows gluing of the wireless sensor device on uneven or unequal surfaces. Embedding the RF tag in a potting compound is beneficial in protecting the RF tag from contact with moisture and allows damping shocks that occur frequently when applying the wireless sensor device for tracking and tracing construction tools such as for example hammers or drills. The wireless sensor device preferably comprises an anti-sabotage sensor comprising a flexible printed circuit board connected to the micro-controller and protruding from the potting compound. This flexible PCB is positioned between the object to be tracked and the flexible side wall of the wireless sensor device and will be damaged upon removal of the wireless sensor device from the object, resulting in a change of signal between the anti-sabotage sensor and the micro-controller.

Other preferred sensors provided in the wireless sensor device comprise temperature sensors, humidity sensors, movement sensors and pressure sensors providing information regarding the use and circumstances of use and functioning of the concerned object.

According to a preferred embodiment of the present invention, a passive RFID tag is embedded in the potting compound. This passive tag is readable through a short distance scanning device and comprises an identification code that can easily be coupled to the unique ID of the RF tag in said computer program.

The wireless sensor device preferably has dimensions of 30 cm^{3,} preferably less than 16 cm³ with a length, depth and height dimension of 3 cm or less to easily fit on small objects such as hammers, drills, electric saws, etc.

The antennae and receivers are arranged in network nodes, each node preferably comprising five antennae and receivers allowing precise location of an object in the network by a signal strength comparing algorithm (RSSI). The network node is preferably coupled to an on-site autonomous powered base unit incorporating an alarm and optionally a means for locating the base unit such as a GPS device. The base unit is in communication with the computer program.

### Method for tracking and tracing

In order to allow efficient tracking and tracing of objects, each of said objects is provided with a wireless sensor device that is fixedly provided thereon. The unique ID of each wireless sensor device and an identification of the associated object is stored on the computer for enabling the computer program to identify an object based on the RF tag's unique ID. Optionally the unique ID is also coupled to the identification code of a passive RFID tag present in the wireless sensor device.

The antennae and receivers are arranged nodes to create a network of nodes covering a specific area, for example a construction site where the objects are allowed moving.

According to the present invention a specific wireless radio protocol is applied for establishing communication between the RF tags and the network. The protocol is designed for a asynchronous semi-duplex communication, preferably on a RF signal license exempt frequency band. The network is designed as a distributed star network with a multi-master environment, wherein all RF tags are master in the network. The micro-controller of each RF tag contains a predetermined set of rules applying for initiating a communication between the RF tag and the network. Said predetermined set of rules comprises an algorithm for calculation of the time frame wherein the RF tag will initiate a new communication with the network. The algorithm comprises (a) variables with respect to the status of the object associated to the RF tag and communicated to the RF tag by means of the above mentioned sensors; and (b) values determined by the computer program in view of the position of the RF tag, the actual time of communication between the RF tag and the computer program and/or meteorological conditions.

In particular the set of rules will determine the time after which the RF tag will send a signal to the network, which time is dependent on for example the day time (daytime working hours vs night), on the status of the object (movement detected on in rest), etc. whereby in between two communications, the RF tag operates in a battery saving mode to maximally extend battery life.

When the RF tag as a master initiates communication with the network by sending a message to the network with all information determined by the set of rules applying for that RF tag, the network will send an acknowledgement signal to the RF tag comprising a specific hold-off timer. During the hold-off time, the RF tag again will operate in a battery saving mode. During this hold-off time, the computer program will check whether a new or updated predetermined set of rules is available for the RF tag and send a message with the new or updated set of rules to the concerned network node. At the end of the hold-off time, the RF tag awakens into receiving mode and the network node forwards the message including the updated or new set of rules to the RF tag. The RF tag will then adopt the new or updated set of rules and return into a battery saving mode in accordance with the new set of rules.

### Example 1

The track and trace method according to the present invention allows for determining which objects are inside the vehicle and which are proximate but outside the vehicle. In this example, one network node is provided comprising one antenna with receiver inside the vehicle and optionally four antennae with receiver outside the vehicle.

In this case the network node preferably further comprises sensors to determine whether the vehicle doors are open or closed and whether the vehicle is in motion or stand still. Optionally a GPS can be connected to the node to establish the position of the vehicle.

Objects with an wireless sensor device fixed thereon can now be tracked and traced in the proximity of the vehicle. Standard, the RF tag will be programmed to initiate communication with the network for example every twenty seconds when in rest and every 5 seconds when moving (determined by moving sensor in the wireless sensor device).

When these objects are loaded into the vehicle, the RF tags of these objects will communicate with the computer program through the concerned network node. The localization of the objects is now possible through a signal strength comparing algorithm (RSSI) well known to people skilled in the art of wireless track and trace systems. As such the computer program determines that the objects are inside the vehicle and the set of rules for initiating communication by the RF tags with the network will be tailored to the new status of the objects.

As when loaded the vehicle, moving of the vehicle will trigger the RFID moving sensor to signal movement, the RF tags will initiate communication with the network every 5 seconds, while in their status there is no real chance of loss or theft. As such, to decrease battery usage, the computer program will tailor the set of rules in the concerned RF tags to initiate communications for example only every minute as long as movement is detected and every 20 seconds when no movement is detected.

A object outside the vehicle at a non-conventional location will be programmed by the computer to initiate communication for example every 5 seconds and in case the vehicle would be detected to move while the object is still out of the vehicle, the wireless sensor device will be programmed to send an alarm code to the network every second allowing immediately warning responsible personnel on the potential loss.

### Example 2

On a construction site different zones are determined by installing respective network nodes each consisting of for example five antennae with receiver. Container for storing specific objects will be equipped with a designated network node having one antenna with receiver inside the container and four antennae with receiver mounted outside on the container, one at each side of the container.

The objects, in particular construction tools such as drills, electric saws or even hammers are equipped with a specific wireless sensor device each. Depending on the kind of construction tool, the RF tags are programmed to initiate communication with the network on specific time intervals depending on the status of that object. RF tags associated to hammers for example will be programmed to initiate a communication with the network every minute when stored in a specific container and every five seconds when moving in range of certain network nodes covering zones where use of the hammer is expected. When moving outside such zone and after initiating communication with the network, the RF tag will be reprogrammed, i.e the set of rules will be tailored to initiate an immediate alarm signal by the RF tag or to initiate a next communication in a much shorter time interval, for example every second.

This tailoring of the set of rules applying for a specific RF tag during each communication allows minimizing communications during expected use/position/status of the associated objects, thereby extending life time of the battery in the RF tag and minimizing communications over the network, whilst in suspected or unauthorized use/position/status of the object increasing the communication of the associated RFID with the network allowing rapid traceability and preventing loss/damage or theft of the object. Due to the tailoring of the rules applying for a specific RF tag, the communication interval can be altered for various circumstances such as day time (working hours)/ night time; weather conditions; presence of several contractors on a single construction site, etc.

Examples of sensors comprised in the RF tags are movement sensor, temperature sensor, pressure sensor, humidity sensors, received signal strength indicator (RSSI), sabotage detection sensor or other sensors providing information on the status.

### Example 3

Electrical wiring are a specific concern on construction sites and are typically uncoupled during night time when theft is most likely. Therefore the kit-in-parts according to the present invention is particularly suited for protecting cables from being stolen.

## Claims

1. A kit-in-parts for tracking and tracing objects, the kit-in-parts comprising: a plurality of wireless sensor devices comprising an active RF tag, each RF tag comprising:
a power source
a micro-controller
a unique ID
an RF module
at least one receiver for exchanging data with said RF tags and in communication with a program loaded on a computer, wherein said RF tag is programmed with a predetermined set of rules applying for transmitting data to the receiver to initiate data exchange between the RF tag and the computer program through said receiver; **characterized in that** said computer program allows tailoring said predetermined set of rules through the receiver during said data exchange between the receiver and the RF tag.

2. The kit-in-parts according to claim 1, wherein said wireless sensor device further comprises a sensor allowing determining a status of the concerned object and providing an input signal to said the micro-controller of the RF tag for generating a variable taking into account in said set of rules applying for transmitting data to the receiver.

3. The kit-in-parts according to claim 2, wherein said sensor is selected from the group comprising: movement sensor, temperature sensor, pressure sensor, humidity sensor, received signal strength indicator (RSSI), sabotage detection sensor.

4. The kit-in-parts according to claim 1, wherein the receiver is in communication with the computer program through a wireless network.

5. The kit-in-parts according to claim 5, wherein a plurality of receivers is provided all in communication with said computer program.

6. The kit-in-parts according to claim 4, wherein said computer program comprises information regarding the position of the receivers.

7. The kit-in-parts according to claim 1, wherein the wireless sensor device further comprises a passive RFID tag.

8. The kit-in-parts according to claim1, wherein the RF tag is embedded in a potting compound.

9. A method for tracking and tracing objects by means of a kit-in-parts as identified in any of the preceding claims, wherein said method comprises the steps of:
- transmitting a tag identification code from the RF tag to a concerned computer program through a receiver;
- transmitting an acknowledgment from the computer program to the RF tag through said receiver, the acknowledgement comprising a specific delay time for the tag to receive a second data package from the computer program;
- the RF tag turning in to a sleep mode having reduced power consumption in view of a mode of transmitting or receiving data;
- the computer determining the location of the RF tag and retrieving a predetermined set of rules applying for a next communication between the RF tag and the computer program;
- transmitting said predetermined set of rules to said RF tag after said specific delay time, said predetermined set of rules replacing the prior set of rules stored in the RF tag.

10. The method according to claim 9, wherein the predetermined set of rules comprises an algorithm for calculation of the time frame wherein the RF tag will initiate a new communication with the computer program.

11. The method according to claim 10, wherein said algorithm comprises variables with respect to the status of the object associated to the RF tag and communicated to the RF tag by means of sensors.

12. The method according to claim 10, wherein the algorithm comprises values determined by the computer program in view of the position of the RF tag, the actual time of communication between the RF tag and the computer program and/or meteorological conditions.

13. An object having an wireless sensor device fixed thereon or therein, said wireless sensor device comprising an active RF tag, each RF tag comprising:
a power source
a micro-controller
a unique ID
an RF module
wherein said RF tag is programmed with a predetermined set of rules applying for transmitting data to a network;
**characterized in that** said RF tag is construed as to allow tailoring said predetermined set of rules during a data exchange between the network and the RF tag.

14. The object according to claim 12, wherein said object is a construction tool.

15. The object according to claim 13, wherein the active RF tag is embedded in a potting compound.
